# EUROPEAN PATENT SPECIFICATION

(11) **EP 1 665 589 B1**
(45) Date of publication and mention of the grant of the patent: **27.05.2009**
(21) Application number: 04766650.8
(22) Date of filing: 31.08.2004
(51) Int. Cl.: H04B 10/17, G02F 1/35

(54) **OPTICAL SIGNAL REGENERATOR FOR HIGH BIT-RATE TRANSMISSION SYSTEMS**
OPTISCHER SIGNALREGENERATOR FÜR ÜBERTRAGUNGSSYSTEME MIT HOHER BITRATE
REGENERATEUR DE SIGNAL OPTIQUE POUR SYSTEMES DE TRANSMISSION A HAUT DEBIT BINAIRE

(30) Priority: 17.09.2003 IT MI20031773
(43) Date of publication of application: 07.06.2006
(73) Proprietor: Ericsson AB, Stockholm (SE)
(72) Inventor: BOGONI, Antonella, I-45100 Mantova (MN) (IT); GHELFI, Paolo, I-46044 Goito (MN) (IT); SCAFFARDI, Mirco, I-43100 Parma (IT); POTI, Luca, I-56124 Pisa (IT)
(74) Representative: Parkinson, Neil Scott
(86) International application number: PCT/EP2004/051968
(87) International publication number: WO 2005/027379

(56) References cited:
- EP-A- 1 227 363
- US-A- 5 646 759
- SU Y ET AL: "Wavelength-tunable all-optical clock recovery using a fiber-optic parametric oscillator" OPTICS COMMUNICATIONS, NORTH-HOLLAND PUBLISHING CO. AMSTERDAM, NL, vol. 184, no. 1-4, 1 October 2000 (2000-10-01), pages 151-156, XP004218416 ISSN: 0030-4018
- WHITAKER N A ET AL: "Lightwave Applications Of Nonlinear Fiber Loop Mirrors" LEOS '92, CONFERENCE PROCEEDINGS. IEEE LASERS AND ELECTRO-OPTICS SOCIETY, 1992 ANNUAL MEETING BOSTON, MA, USA 16-19 NOV. 1992, NEW YORK, NY, USA,IEEE, US, 16 November 1992 (1992-11-16), pages 220-221, XP010103078 ISBN: 0-7803-0526-4
- SMITH K ET AL: "PULSE SHAPING COMPRESSION, AND PEDESTAL SUPPRESSION EMPLOYING A NONLINEAR-OPTICAL LOOP MIRROR" OPTICS LETTERS, OPTICAL SOCIETY OF AMERICA, WASHINGTON, US, vol. 15, no. 22, 15 November 1990 (1990-11-15), pages 1294-1296, XP000162152 ISSN: 0146-9592

## Description

The present invention relates to an all-optical signal regenerator particularly suited to very high bit-rate optical transmission systems.

The development of high bit-rate optical transmission systems conflicts with the limitations caused by the deterioration of signals due to nonlinearity of fibers, chromatic dispersion and polarization mode. In high bit-rate optical systems an in-line regeneration of the optical signal is therefore necessary to increase transmission distance.

For systems with bit rate greater than 40 Gbit/s, regeneration must be done in the optical domain since the band amplitude of the electronic devices does not allow opto-electronic conversion.

Essentially, an all-optical pulse regenerator is a functional block which receives pulsed signals affected by jitters, noise, amplitude fluctuations and pulse widening and transmits a resynchronized pulsed signal reshaped and noise free.

In the literature, many optical regenerator schemes have been presented making use of nonlinear effects in the optical fibers or in the semiconductor devices but they all show strong limitations when they work with a high bit-rate. The known method most used for realizing signal regeneration in high bit-rate transmission systems is to transfer the information from the incoming signal to a locally generated pulsed clock whose characteristics in terms of pulse shape and amplitude, noise and stability are suited for transmission.

To avoid transferring signal amplitude fluctuations to the clock, the regenerator should have a nonlinear characteristic similar to that of an ideal amplitude limiter.

In reality, all the known nonlinear members which can be used to realize a regenerator have serious limitations when the bit rate increases. Fast phenomena in semiconductor materials have low efficiency while the Kerr effects in optical fibers have limitations caused by the different propagation velocities of the data signals and clock signals. Moreover, to obtain nonlinear effects with sufficient efficiency, high signal peak power is necessary but the increase in peak signal power is limited by the maximum saturation power of the Erbium-Doped Fiber Amplifier (EDFA) used. This means that when working with very high bit rates, for example 160 Gbit/s, the necessary high peak powers are not easy to reach and the nonlinear effects cannot be achieved with sufficiently high efficiency.

Moreover, propagation of the high-power signal through nonlinear members is limited by the maximum mean optical power tolerable in case of semiconductor devices and by undesired nonlinear effects which appear in the optical fiber.

Therefore, regeneration of a signal with truly high bit rate, for example 160 Gbit/s, is a very difficult job.

Until now, experimental results of some success concerning all-optical regeneration have been presented for signals having bit rates only up to 40 Gbit/s. With higher bit rates, the devices proposed until now have proved highly unsatisfactory.

EP1227363 discloses a single-stage optical pulse generator which seeks to produce a compressed pulse with reduced noise by way of recombining portions of an input pulse.

The general purpose of the present invention is to remedy the above-mentioned shortcomings by making available an optical regenerator capable of giving satisfactory performance even with signals having truly very high bit rates.

In view of this purpose it was sought to provide in accordance with the present invention a pulsed optical signal regenerator device comprising three optical stages cascaded between an input to which is applied a signal Sᵢ to be regenerate and an output art which is available a regenerated signal Sᵣ with the first stage comprising a first noise suppressor on the zero for noise reduction in the spaces between the input signal pulses and the second stage comprising an inverting converter for transferring to a clock signal the information carried by the signal, outgoing from the first stage and introducing a logical inversion of the signal for transformation of the pulses affected by noise in spaces affected by noise and the third stage comprising a second noise suppressor on the zero for reduction of noise in the spaces between the signal pulses output from the second stage.

To clarify the explanation of the innovative principles of the present invention and its advantages compared with the prior art there is described below with the aid of the

annexed drawings a possible embodiment thereof by way of non-limiting example applying said principles. In the drawings:
FIG 1 shows a diagrammatic view of a regenerator realized in accordance with the principles of the present invention, and
FIG 2 shows a graph of wave shapes in various points of the regenerator of FIG 1.

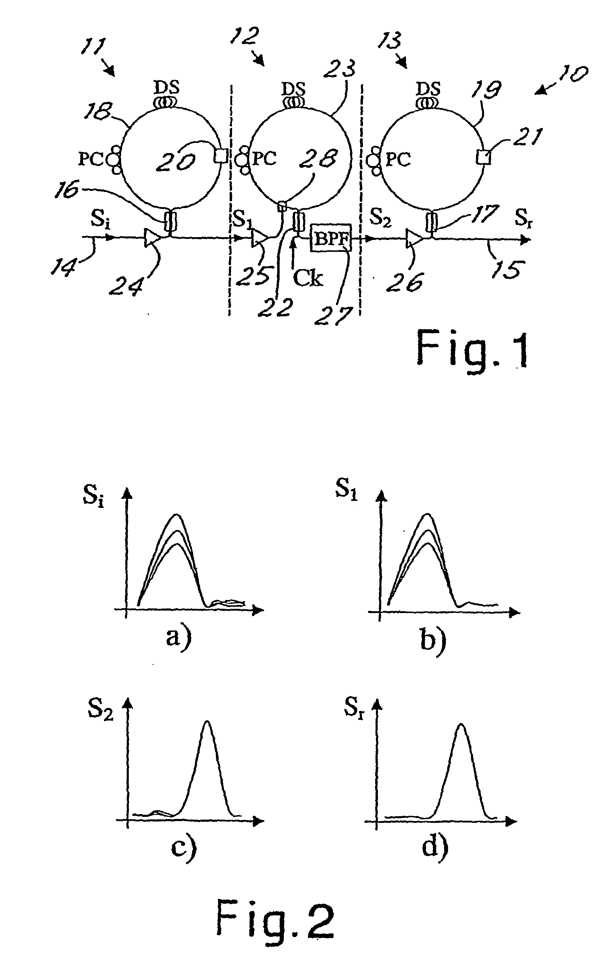

With reference to the figures, FIG 1 shows an all-optical regenerator device designated as a whole by reference number 10 and realized in accordance with the present invention.

The regenerator 10 divides the regeneration process in three different steps or stages by separating the pulse reshaping function from that of noise elimination. Noise elimination is in turn separated into noise elimination in the spaces between the pulses (or "mark") of the signal and elimination of the noise at the pulses.

As may be seen in FIG 1, to do all this the regenerator 10 comprises three optical stages 11, 12, 13 arranged in a cascade between an input 14 to which the signal Sᵢ to be regenerated is applied and an output 15 from which the regenerated signal Sᵣ is taken.

In particular, in the first stage 11 the noise in the spaces between the signal pulses is reduced. The second stage 12 transfers to a clock signal Ck the information carried by the incoming data signal while at the same time introducing a logical inversion, which transforms the noise-affected pulses into noise-affected spaces. Lastly, the third stage 13 suppresses the residual noise on the spaces.

This way, a pedestal suppressor can be used as a noise suppressor on the zero in the first stage, a wavelength inverting converter as a data transfer block in the second stage, and then another noise suppressor on the zero to eliminate the residual noise in the last stage.

The advantage of this technique is that pedestal suppressors and all-optical wavelength converters, which can satisfactorily process ultra-high bit rate signals are subsystems well known in the art.

Moreover, the proposed scheme can be used easily for realization of an ultra-fast regenerative demultiplexer merely by using a clock signal with the tributary bit rate rather than with the aggregate bit rate. This characteristic can aid in reducing the complexity of an entire transmission system.

To realize the functions of noise suppression on the zero and of inverted data transfer it was advantageously chosen to use the nonlinear effects in the optical fibers. Indeed, it is well known that the Kerr effects in optical fibers are very fast (several hundred femtoseconds). Moreover, high efficiency is ensured by the use of interferometric structures.

Among fiber-based nonlinear devices, the known optical members called Nonlinear Optical Loop Mirrors (NOLM) were found here very advantageous for the specific application.

As known, NOLMs consist virtually of an optical fiber loop connected to the outlet ports of a fiber coupler. An incoming pulse is thus divided in two pulses with different amplitudes proportionate to the coupling ratio. The pulses counterpropagate through the loop and are recombined when they reach the coupler. The recombination effect depends on the characteristics - for example the phase - which the two counterpropagating signals have taken on in their loop path.

In particular, the noise suppressors on the zero 11 and 13 were implemented by using a NOLM based on Self Phase Modulation (SPM) in a known DS fiber (Dispersion Shifted Fiber or DSF). In this structure the incoming signal (Sᵢ for stage 11 and S₂ for stage 13) is divided in two parts by a coupler (16 or 17) so that said two parts counterpropagate in a fiber loop (18 or 19) in which the DS fiber acts as a nonlinear means. A polarization controller (PC) along the fiber ensures that the two signal parts are recombined at the NOLM outlet with parallel polarizations.

A loss member (20 or 21) in the loop unbalances the counterpropagating components of the signal so that each one tries a different amount of SPM in the DS fiber depending on the optical power in the fiber and the length of the fiber.

When incoming optical power is low, i.e. near the level of the zeros, the DS fiber does not induce a significant SPM in each of the two halves of the signal. Under these conditions the two counterpropagating components of the signal interact in phase opposition and then the loop acts like a mirror and the signal is completely reflected back.

Instead, when incoming power is sufficiently high, i.e. near peak, the DS fiber induces a different phase shift on the two unbalanced parts of the signal so that the two counterpropagating components of the signal do not interfere in phase opposition. This makes for good functioning as a pedestal suppressor and thus cancellation of the noise in the spaces between the pulses is obtained.

It is true that it is known that if the lack of agreement between the phases induced reaches approximately π at peak pulse, the NOLM described above would be able to reduce the noise even on the pulses thanks again to its strongly nonlinear characteristic which behaves as a strong limiter. However, to get this condition it would be necessary to use very high peak pulse powers since the DS fiber must be kept short to avoid broadening of the pulse because of chromatic dispersion and polarization fluctuations caused by mechanical vibrations. Working with very high bit-rate pulsed signals (for example 160 Gbit/s) it is impossible to reach the powers necessary under the limited operating conditions of the pulses and a NOLM can only suppress the noise in the spaces.

But thanks to the particular inventive idea of the present invention it is possible to use a noise suppressor on the zero or pedestal suppressor even to eliminate the noise on the pulses and this is made possible by the inverting function of the intermediate stage 12.

To realize the data conversion block of the intermediate stage 12 it was found advantageous to use a known NOLM based on Cross Phase Modulation (NOLM-XPM). Even the stage 12 NOLM comprises a coupler 22 which divides an incoming signal in two components so that the two components counterpropagate each other in a fiber loop 23 in which a DS fiber acts as a nonlinear means while a polarization controller (PC) along the fiber ensures that the two parts of the signal are recombined at the outlet of the NOLM with parallel polarizations.

The operating principle is the same as that of the SPM-based NOLM but in stage 12 the phase difference between the two counterpropagating signal components is induced by a pump signal circulating in the loop in the right direction. The signal incoming to the NOLM is no longer the signal to be treated but a pulsed clock Ck produced by an appropriate known source (not shown) with characteristics adequate for high bit-rate transmission. The data signal S₁ arriving from the previous stage acts as a pump and is introduced into the loop by an optical coupler 28, inducing a phase shift on the copropagating components of the clock signal. A pass-band filter 27 at the output of stage 12 is chosen with a band such as to maintain only the regenerated signal at the clock laser wavelength.

Data and clock must be accurately synchronized in the DS fiber so that the phase shifting will be induced exactly at the data signal pulses. Circuits which permit such synchronization are known and readily imaginable to those skilled in the art. Therefore they will not be further shown or described.

The data transfer block is made to work in inverse logic so as to exchange spaces and pulses. This condition can be obtained by adjusting the loop polarization so that the two parts of the clock are added out of phase only if phase shifting is induced.

In this manner the signal S₂ output from stage 12 is regenerated in shape and is also suited to being treated by stage 13 (again a pedestal suppressor) for reduction of residual noise transferred from the pulses to the spaces.

To have the necessary power at the input of the three NOLMs used, each stage also comprises a suitable known optical amplifier, respectively 24, 25, 26, advantageously an EDFA amplifier.

FIG 2 shows diagrammatically the improvement in quality of the signal which traverses the regenerator. As may be seen in FIG 2a, the signal Si input to the regenerator is out of shape and with noise components. After passage through the first stage of the regenerator, the signal (S₁, FIG 2b) was filtered of the noise components in the spaces (the low-level noise was suppressed). In the second stage 12 the data transfer block transfers the information to the clock signal with a logical inversion so as to obtain the dual effect of reshaping the signal pulses and obtaining a cleaned high level while level zero is still noisy (signal S₂, FIG 2c). Lastly, in the third stage 13 the noise suppressor on the zero cancels the noise contribution moved from the pulses to the spaces concluding the regeneration process and allowing obtaining the completely regenerated signal Sᵣ (FIG 2d).

In a regenerator implementation in accordance with the present invention a first stage 11 was realized with a section of DS fiber 1 km long. This length was chosen as a compromise between pulse instability and widening which increase with the length of the fiber and the need for greater power the shorter the fiber.

With the chosen value, a 160 Gbit/s signal with a pulse duration of 2 psec needs approximately 23 dBm of mean power to induce the desired nonlinear effects in the NOLM and this can easily be found by using a commercial EDFA amplifier.

In the second stage 12 the DS fiber was also chosen approximately 1 km long since this length of fiber working with a 160 Gbit/s signal was found to give a good compromise between instability and pulse widening on the one hand and required power on the other. The mean optical power of the data signal inducing the desired phase shift is approximately 19.4 dBm. As discussed above, at 160 Gbit/s the necessary power giving the desired effects is readily obtainable with optical amplification.

Lastly, in the third stage 13 a 1 km DS fiber was used while the mean optical power corresponds to approximately 27 dBm at 160 Gbit/s. Even this amount of power is obtainable without problems with a normal EDFA amplifier.

Assuming that the noise statistic after the regenerator is still gaussian, the merit factor of the diagrams was experimentally measured roughly before and after the regeneration made with a regenerator in accordance with the present invention. Increase in the merit factor proves the signal quality improvement. Performance of the regenerator depends in some measure on the input conditions such as high noise on the pulses or the spaces or both. In any case, the regenerator in accordance with the present invention ensures a substantially improved merit factor. For example, some experimental tests with a sample device realized in accordance with the present invention made clear an increase in the merit factor from 4.8 to 6 even under the most unfavorable conditions of use. Under more usual conditions, the results showed an improvement of the merit factor from 3.2 to at least 6.3.

Even tests of a regenerator in accordance with the present invention in the presence of intersymbolic interference gave more than satisfactory results. For example, using a clock and a multiplexed 40 Gbit/s signal, the comparison between the rough input and output diagrams showed that the regenerator can transfer information with a significant improvement in the rough diagram and a complete intersymbolic interference suppression with considerable improvement in the merit factor, for example from 3.2 to 6.1.

Even in use as a regenerator demultiplexer, the device in accordance with the present invention gave more than satisfactory results. For example, a regenerator demultiplexer device realized in accordance with the present invention was used experimentally to regenerate and demultiplex to 10 Gbit/s a 160 Gbit/s signal after propagation through 10 km of DS fiber. In this case, as mentioned above, the use of a clock with tributary bit rate (10 GHz clock) realizes the regeneration process and demultiplexing simultaneously. Even if clock pulses not perfectly optimized with respect to the data signal are used (which produces the appearance of a second oscillation), the improvement in the rough diagram of the demultiplexed channel proved quite evident with a measured merit factor improvement from 3.0 to 5.9.

It is now clear that the predetermined purposes have been achieved by making available a regenerator allowing a significant improvement in the signal in terms of noise reduction, reshaping of the signal and jitter suppression even though handling truly high bit-rate signals with the additional advantage that the regenerator proposed can also be used easily as a demultiplexer with regeneration.

Naturally the above description of an embodiment applying the innovative principles of the present invention is given by way of non-limiting example of said principles within the scope of the exclusive right claimed here.

For example, although it was found advantageous to use nonlinear members based on NOLM of the XPM and SPM types, the availability of ultra-fast nonlinear members with higher SPM and XPM efficiency can be used to reduce power requirements and further improve regeneration and demultiplexer performance.

## Claims

1. Pulsed optical signal regenerator device comprising three optical stages (11,12,13) arranged in cascade between an input (14) to which is applied a signal Sᵢ to be regenerated and an output (15) at which is available a regenerated signal Sᵣ with the first stage (11) comprising a first noise suppressor on the zero for noises reduction in the spaces between the incoming signal pulses with the seconds stage (12) comprising an inverting converter for transferring to a clock signal (Ck) the information carried by the signal outgoing from the first stage and for introducing a logical inversion of the signal for transformation of the pulses affected by noise in spaces affected by noise with the third stage (13) comprising a second noise suppressor on the zero for reduction of the noise in the spaces between the signal pulses output from the second stage.

2. Device in accordance with claim 1 **characterized in that** the noise suppressors on the zero are made up of pedestal suppressors comprising Nonlinear Optical Loop Mirror devices based on Self Phase Modulation.

3. Device in accordance with claim 2 **characterized in that** the Nonlinear Optical Loop Mirror devices based on self phase Modulation comprise a fiber loop (18,19) in which two components of the signal entering the stage are made to counterpropagate and along which there are a Dispersion Shifted fiber. acting as a nonlinear means and a polarization controller

4. Device in accordance with claim 1 **characterized in that** the inverting converter of the second stage comprises a Nonlinear Optical Loop Mirror device based on Cross Phase Modulation.

5. Device in accordance with claim 4 **characterized in that** the Nonlinear Optical Loop Mirror device of the second stage (12) comprises a fiber loop (23) in which two clock signal components are made to counterpropagate and along which there are a DS fiber acting as a nonlinear means and a polarization controller (PC) with the signal issuing from the first stage (11) being fed in as a pump signal in the fiber loop (23).

6. Device in accordance with claim 5 **characterized in that** the signal output by the Nonlinear Optical Loop of Mirror device of the second stage and directed to the third stage is made to pass through a pass-band filter (27) with a band such as to keep virtually only the signal regenerated in the second state at the clock signal wavelength.

7. Device in accordance with claim 1 **characterized in that** each stage comprises an Erbium-doped fiber a amplifier (24,25,26)

8. Device in accordance with claim 3 **characterized in that** the Dispersion shifted fiber has a length around 1 km.

9. Device in accordance with claim 5 **characterized in that** the Dispersion shifted fiber has a length around 1 km.

10. Device in accordance with claim 1 **characterized in that** the clock signal is synchronized at a tributary bit rate of the input signal, rather than an aggregate bit rate input singal, in such a manner as to obtain a demultiplexing function of the incoming signal.

## Patentansprüche

1. Impulsgesteuerte Lichtsignalregenerationsvorrichtung, umfassend drei optische Stufen (11, 12, 13), die zwischen einem Eingang (14), an den ein zu regenerierendes Signal S₁ angelegt wird, und einem Ausgang (15), an dem ein regeneriertes Signal Sᵣ verfügbar ist, in Kaskade angeordnet sind, wobei die erste Stufe (11) einen ersten Rauschunterdrücker am Nullpunkt zur Rauschverminderung in den Räumen zwischen den eingehenden Signalimpulsen umfasst, die zweite Stufe (12) einen invertierenden Wandler zum Überführen der Informationen, die durch das Signal befördert werden, das von der ersten Stufe abgeht, auf ein Taktsignal (Ck) und zum Einführen einer logischen Inversion des Signals zur Umwandlung der Impulse, die durch Rauschen in Räumen beeinflusst werden, die durch Rauschen beeinflusst werden, und die dritte Stufe (13) einen zweiten Rauschunterdrücker am Nullpunkt zur Verminderung des Rauschens in den Räumen zwischen den Signalimpulsen umfasst, die von der zweiten Stufe ausgegeben werden.

2. Vorrichtung nach Anspruch 1, **dadurch gekennzeichnet, dass** die Rauschunterdrücker am Nullpunkt aus Schwarzwertimpulsunterdrückern bestehen, die auf Eigenphasenmodulation basierende nichtlineare optische Ringspiegelvorrichtungen umfassen.

3. Vorrichtung nach Anspruch 2, **dadurch gekennzeichnet, dass** die auf Eigenphasenmodulation basierenden nichtlinearen optischen Ringspiegelvorrichtungen einen Faserring (18, 19) umfassen, in welchem zwei Komponenten des in die Stufe eintretenden Signals veranlasst werden, sich in Gegenrichtung fortzupflanzen, und entlang welchem eine dispersionsverschobene Faser, die als ein nichtlineares Mittel agiert, und eine Polarisationssteuerung vorhanden sind.

4. Vorrichtung nach Anspruch 1, **dadurch gekennzeichnet, dass** der invertierende Wandler der zweiten Stufe eine auf Kreuzphasenmodulation basierende nichtlineare optische Ringspiegelvorrichtung umfasst.

5. Vorrichtung nach Anspruch 4, **dadurch gekennzeichnet, dass** die nichtlineare optische Ringspiegelvorrichtung der zweiten Stufe (12) einen Faserring (23) umfasst, in welchem zwei Taktsignalkomponenten veranlasst werden, sich in Gegenrichtung fortzupflanzen, und entlang welchem eine DS-Faser, die als ein nichtlineares Mittel agiert, und eine Polarisationssteuerung (PC) vorhanden sind, wobei das Signal, das von der ersten Stufe (11) ausgegeben wird, als ein Pumpsignal in den Faserring (23) eingespeist wird.

6. Vorrichtung nach Anspruch 5, **dadurch gekennzeichnet, dass** das Signal, das durch die nichtlineare optische Ringspiegelvorrichtung der zweiten Stufe ausgegeben und zur dritten Stufe geleitet wird, veranlasst wird, durch ein Durchlassfilter (27) mit einem derartigen Band durchzutreten, dass praktisch nur das in der zweiten Stufe regenerierte Signal auf der Taktsignalwellenlänge gehalten wird.

7. Vorrichtung nach Anspruch 1, **dadurch gekennzeichnet, dass** jede Stufe einen Erbium-dotierten Faserverstärker (24, 25, 26) umfasst.

8. Vorrichtung nach Anspruch 3, **dadurch gekennzeichnet, dass** die dispersionsverschobene Faser eine Länge von etwa 1 km hat.

9. Vorrichtung nach Anspruch 5, **dadurch gekennzeichnet, dass** die dispersionsverschobene Faser eine Länge von etwa 1 km hat.

10. Vorrichtung nach Anspruch 1, **dadurch gekennzeichnet, dass** das Taktsignal eher bei einer Teilbitrate des Eingangssignals als bei einer Summenbitrate des Eingangssignals derart synchronisiert wird, dass eine Demultiplexfunktion des eingehenden Signals erhalten wird.

## Revendications

1. Dispositif régénérateur de signal optique à impulsions comprenant trois étages optiques (11, 12, 13) disposés en cascade entre une entrée (14) à laquelle un signal S₁ à régénérer est appliqué et une sortie (15) à laquelle est disponible un signal régénéré Sᵣ, le premier étage (11) comprenant un premier suppresseur de bruit sur le zéro à des fins de réduction de bruit dans les espaces entre les impulsions de signal entrant, le second étage (12) comprenant un convertisseur inverseur pour transférer à un signal d'horloge (Ck) l'information transportée par le signal sortant du premier étage et introduisant une inversion logique du signal à des fins de transformation des impulsions affectées par le bruit dans des espaces affectés par le bruit, le troisième étage (13) comprenant un second suppresseur de bruit sur le zéro à des fins de réduction du bruit dans les espaces entre les impulsions de bruit sorties du second étage.

2. Dispositif selon la revendication 1, **caractérisé en ce que** les suppresseurs de bruit sur le zéro consistent en des suppresseurs à piédestal comprenant des dispositifs de miroirs à boucle optique non linéaire basés sur une automodulation de phase.

3. Dispositif selon la revendication 2, **caractérisé en ce que** les dispositifs de miroirs à boucle optique non linéaire basés sur une automodulation de phase comprennent une boucle de fibre (18, 19) dans laquelle deux composants du signal entrant dans l'étage sont amenés à se propager en sens opposé et le long de laquelle se trouve une fibre à dispersion décalée fonctionnant comme un moyen non linéaire et un contrôleur de polarisation.

4. Dispositif selon la revendication 1, **caractérisé en ce que** le convertisseur inverseur du second étage comprend un dispositif de miroir à boucle optique non linéaire basé sur une modulation de phase croisée.

5. Dispositif selon la revendication 4, **caractérisé en ce que** le dispositif de miroir à boucle optique non linéaire du second étage (12) comprend une boucle de fibre (23) dans laquelle deux composants de signal d'horloge sont amenés à se propager en sens opposé et le long de laquelle se trouve une fibre à dispersion décalée fonctionnant comme un moyen non linéaire et un contrôleur de polarisation (PC), le signal délivré du premier étage (11) étant injecté comme un signal de pompage dans la boucle de fibre (23).

6. Dispositif selon la revendication 5**, caractérisé en ce que** le signal sorti du dispositif de miroir à boucle optique non linéaire du second étage et dirigé vers le troisième étage est amené à passer à travers un filtre passe bande (27) avec une bande propre à conserver virtuellement seulement le signal régénéré dans le second état au niveau de la longueur d'onde de signal d'horloge.

7. Dispositif selon la revendication 1, **caractérisé en ce que** chaque étage comprend un amplificateur à fibre dopée à l'erbium (24, 25, 26).

8. Dispositif selon la revendication 3, **caractérisé en ce que** la fibre à dispersion décalée a une longueur d'environ 1 km.

9. Dispositif selon la revendication 5, **caractérisé en ce que** la fibre à dispersion décalée a une longueur d'environ 1 km.

10. Dispositif selon la revendication 1, **caractérisé en ce que** le signal d'horloge est synchronisé à un débit tributaire du signal d'entrée plutôt qu'un débit agrégé du signal d'entrée, de manière à obtenir une fonction de démultiplexage du signal entrant.
